# EUROPEAN PATENT SPECIFICATION

(11) **EP 3 282 154 B1**
(45) Date of publication and mention of the grant of the patent: **08.01.2020**
(21) Application number: 17183793.3
(22) Date of filing: 28.07.2017
(51) Int. Cl.: F16K 5/06, F16K 27/06

(54) **SHUT-OFF VALVE**
ABSPERRHAHN
ROBINET D'ARRÊT

(30) Priority: 09.08.2016 IT 201600083938
(43) Date of publication of application: 14.02.2018
(73) Proprietor: Enolgas Bonomi S.p.A., 25062 Concesio (Brescia) (IT)
(72) Inventor: LICCIARDELLO, Gaetano, I-25062 Concesio, BRESCIA (IT)
(74) Representative: Pulieri, Gianluca Antonio

(56) References cited:
- EP-A1- 2 754 932
- EP-A1- 2 796 755
- EP-A2- 0 159 799
- DE-U1- 8 715 454
- DE-U1-202013 001 237
- US-A- 4 140 149
- US-A- 5 618 027
- US-A1- 2005 121 640
- US-A1- 2006 043 732

## Description

The present invention is in the field of shut-off valves for water distribution systems; in particular, the object of the present invention is a shut-off valve provided with an end of stroke stop for the rotation of the shutter.

Typically, a shut-off valve with shutter consists of a valve body, a spherical shutter housed in the valve body, an end piece applied to the valve body to keep the shutter in place, and a maneuvering lever integral in rotation with the shutter via a pin.

The valve must necessarily provide an end of stroke stop for the rotation of the shutter between the angular position of closure and the angular position of maximum opening.

Current solutions include, on the outside of the valve body, a stop wall made on the neck of the valve body, from which protrudes a pin connecting to the lever; the lever comprises an abutment surface which, abutting with the valve body, determines the end of stroke positions for the lever and hence the angular position of closure and the angular position of maximum opening of the shutter. An example for such a valve is given in DE 87 15 454 U1.

In such field, given the cost of raw materials, there is a tendency to make increasingly compact valves, obviously via economical and reliable production processes.

In this respect, the Applicant has undertaken to find solutions having a particularly compact valve body, for example devoid of a neck; consequently, the Applicant has devised an alternative to the known solutions for the realization of an end of stroke stop for the rotation of the shutter.

The invention consists of a valve body according to claim 1. The dependent claims define further embodiments of the invention.

The features and advantages of the valve body according to the present invention will be apparent from the description given below, provided by way of nonlimiting example, in accordance with the appended figures, wherein:
- figure 1 shows a longitudinal sectional view of a shut-off valve according to the present invention, in accordance with a first embodiment, in a closed configuration;
- figure 2 shows a valve body with shutter and pin of the valve of figure 1;
- figure 3 shows a shutter of the valve of figure 1;
- figure 4 shows the valve of figure 1 in a configuration of maximum opening;
- figure 5 shows a longitudinal sectional view of a shut-off valve according to the present invention, in accordance with a further embodiment, in a configuration of maximum opening;
- figure 6 shows a valve body with shutter and pin of the valve of figure 5;
- figure 7 shows a shutter of the valve of figure 5;
- figure 8 shows the valve of figure 5 in a closed configuration;
- figure 9 shows a valve body of the valve according to the present invention;
- figure 10 illustrates a step of the method of manufacture of a valve according to the present invention;
- figure 11 shows an enlargement of the detail XI of figure 10;
- figure 12 illustrates a further step of the method of manufacture of a valve according to the present invention;
- figure 13 shows an enlargement of the detail XIII of figure 12;
- figures 14, 15 and 16 schematically show the chip removal machining of the method of manufacture of a valve according to the present invention.

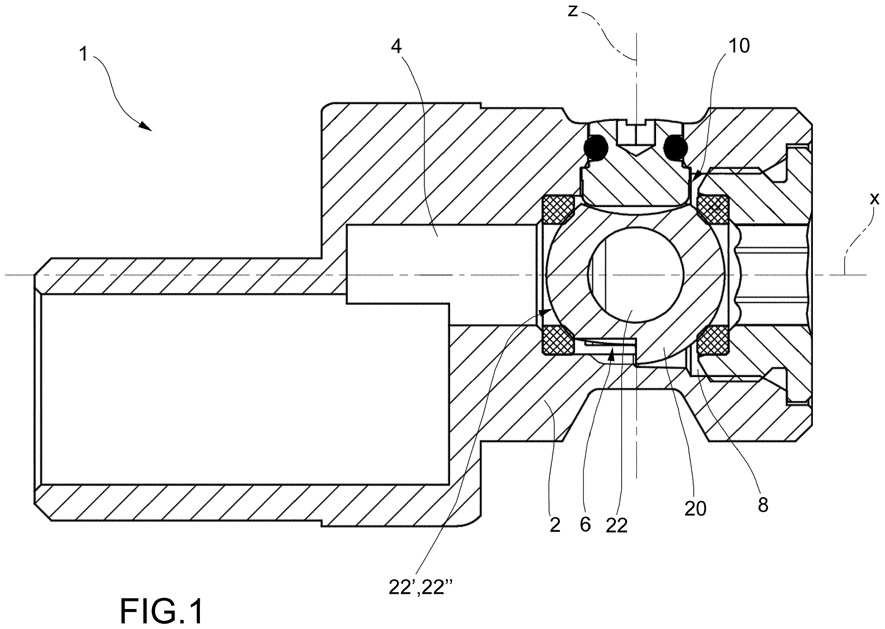

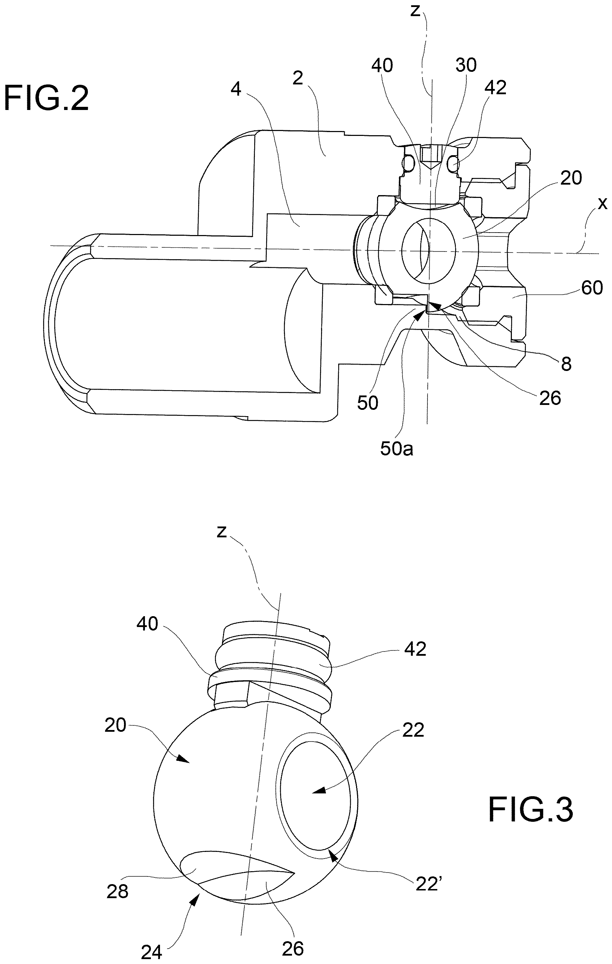

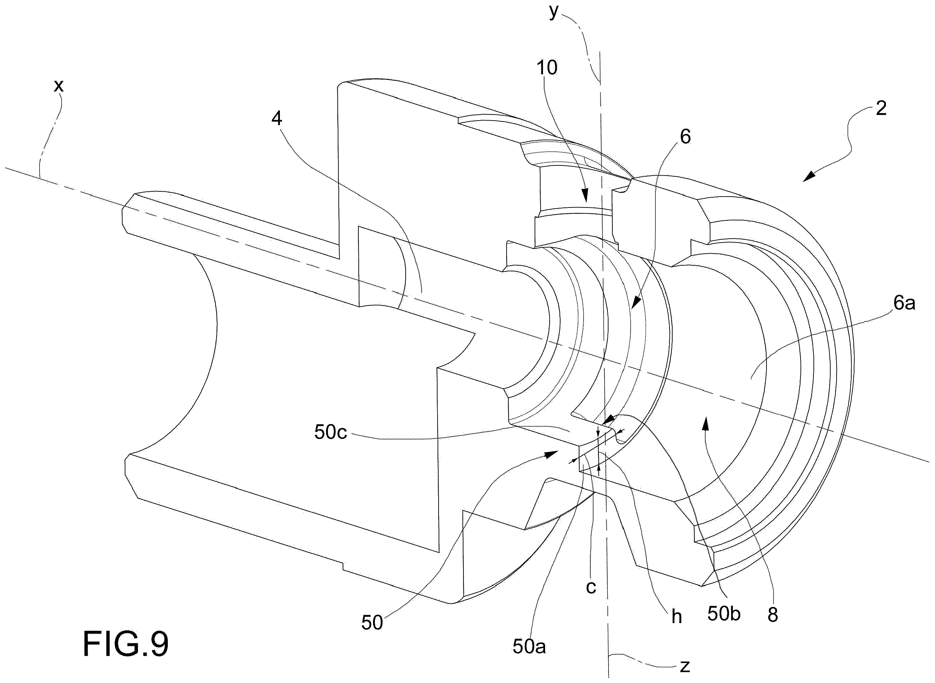

Referring to figures 1 to 4 and figure 9, a shut-off valve for water distribution systems is indicated at 1.

The valve 1 comprises a valve body 2 made in one piece, preferably of brass. For example, the valve body 2 is made by hot or cold pressing.

The valve body 2 has internally a first conduit 4, intended, for example, to provide a water outlet conduit, a shutter seat 6, and a second conduit 8, opposite to the first conduit 4 with respect to the shutter seat 6.

The first conduit 4, the seat 6 and the second conduit 8 are aligned along a rectilinear body axis X.

In addition, the valve body 2 has a pin passage 10 made by a through hole through the wall of the valve body with a hole axis Y orthogonal to the body axis X; the pin passage 10 connects the outer environment with the shutter seat 6.

In addition, the valve 1 comprises a shutter 20 housed rotatably in the shutter seat 6 about a rotation axis Z which coincides with the hole axis Y.

The shutter 20 has an essentially spherical outer surface and includes an internal passage 22 to place the first conduit 4 in fluidic communication with the second conduit 8 in an open configuration.

In particular, the inner passage 22 has a first opening 22' and a second opening 22", diametrically opposed and preferably symmetrical.

Said openings 22', 22" lie on respective imaginary opening planes, parallel to each other and to the rotation axis Z.

Furthermore, the shutter 20 preferably has, at the base of the shutter 20 in the shutter seat 6, a groove 24, made, for example, by means of milling.

The groove 24 has a flat abutment surface 26, contained on an imaginary abutment plane parallel to the rotation axis Z, and a flat auxiliary surface 28 contained on an imaginary auxiliary plane perpendicular to the rotation axis Z. Preferably, the imaginary abutment plane contains the rotation axis Z.

According to such embodiment, the imaginary abutment plane, which contains the abutment surface 26, is orthogonal to the imaginary opening planes whereon the openings 22', 22" of the conduit 22 lie.

Also, preferably, the shutter 20 has a cut 30, opposite to the groove 24.

The valve 1 also comprises a pin 40, preferably provided with a sealing ring 42, housed in the pin passage 10 of the valve body 2; the pin 40 is engaged with the shutter 20, and in particular is inserted in the cut 30 of the same.

The valve 1 further comprises a maneuvering lever (not shown) connected integrally in rotation to the pin 40.

In the shutter seat 6 at the base of the shutter 20, the valve body 2 has an abutment stop 50 which, cooperating with the abutment surface 26 of the shutter 20, defines the opening limit position and the closing limit position of said shutter 20.

The abutment stop 50 is delimited by a flat frontal abutment surface 50a, lying on an imaginary plane parallel to the rotation axis Z. Preferably, said imaginary plane contains the rotation axis Z.

Moreover, the abutment stop 50 is delimited by a lateral abutment surface 50b extending from the frontal abutment surface 50a, incident to a circumferential direction of the shutter seat 6.

Finally, the abutment stop 50 is delimited by an upper surface 50c lying on an imaginary cylindrical surface coaxial to the body axis X.

In other words, the abutment stop 50 forms a step in the shutter seat 6, having a predetermined raised "h" between a bottom surface 6a of the cylindrical circular shutter seat 6 and said upper surface 50c, and a predetermined circumferential width "c".

The shutter 20 rests with its lower portion, where the groove 24 is formed, on the bottom surface 6a of the shutter seat 6.

Moreover, the auxiliary surface 28 at least partially overlaps the upper surface 50c of the abutment stop 50.

In a closed configuration of the valve (figure 1), the shutter 20 is arranged in the angular position of closure, wherein the abutment surface 26 of the shutter 20 is in abutment against the frontal abutment surface 50a of the abutment stop 50.

In said configuration, the internal passage 22 of the shutter 20 does not place the first conduit 4 in communication with the second conduit 8 of the valve body 2, thus obstructing the passage of water through the valve.

By rotation of the shutter 20, the valve 1 is placed in an open configuration wherein the passage of water between the first conduit 4 and the second conduit 8 is permitted.

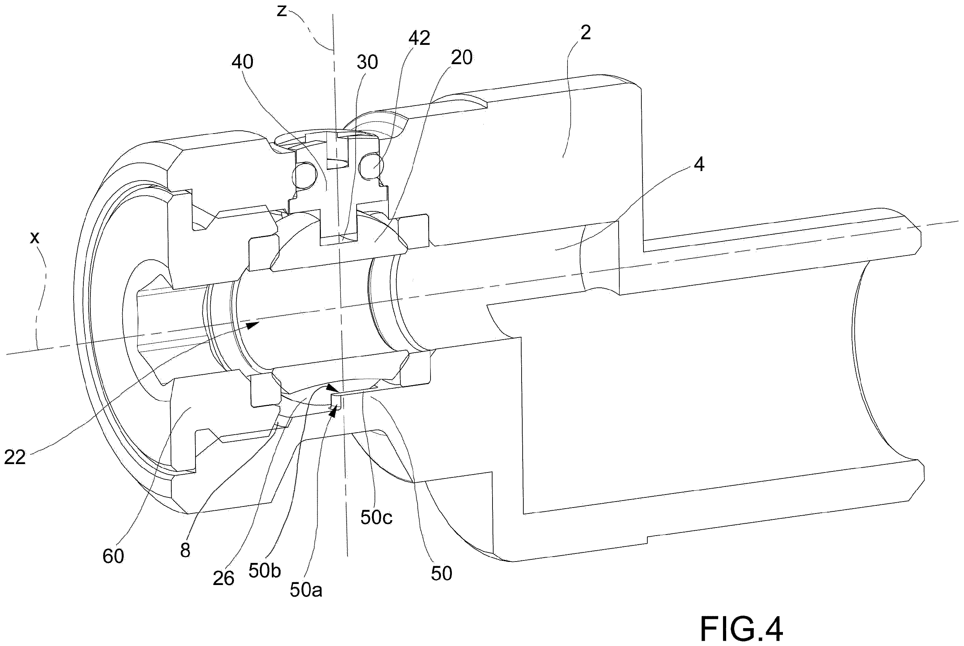

In a configuration of maximum opening (figure 4), the shutter 20 is arranged in the angular position of maximum opening, wherein the abutment surface 26 of the shutter 20 is in abutment against the lateral abutment surface 50b of the abutment stop 50.

Advantageously, such embodiment allows high precision of the closure position, as it is defined by the abutment between two surfaces (the abutment surface 26 of the shutter 20 and the frontal abutment surface 50a of the abutment stop 50), which, described below, are machined in such a way as to obtain a narrow dimensional or position tolerance, in particular by tool machining to remove chips.

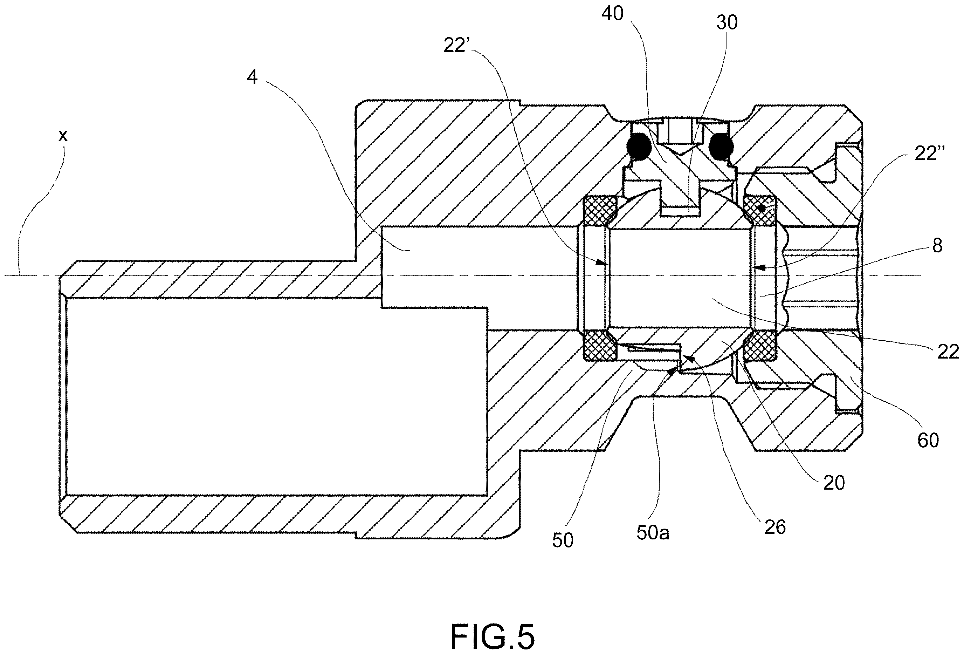

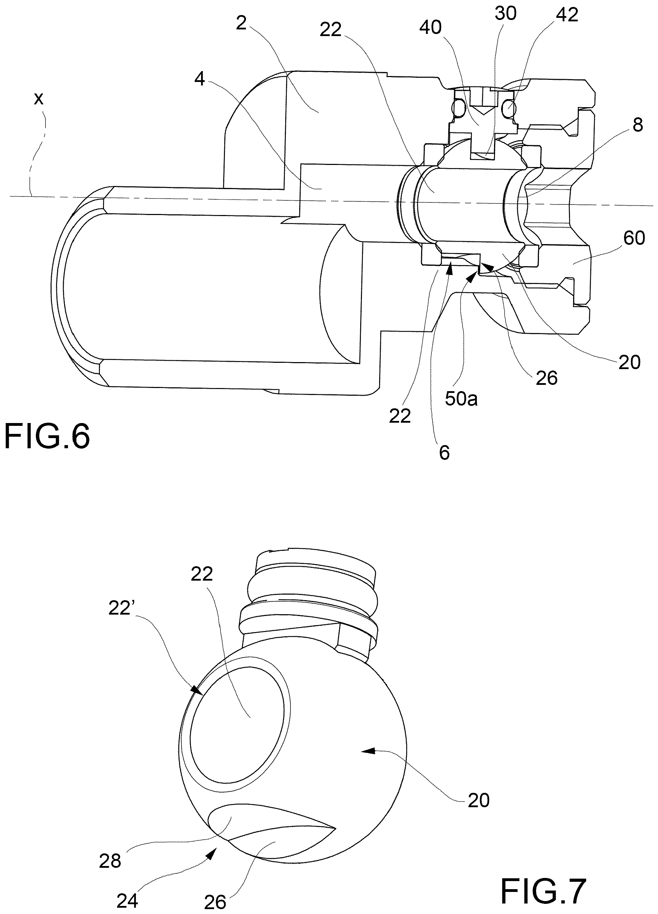

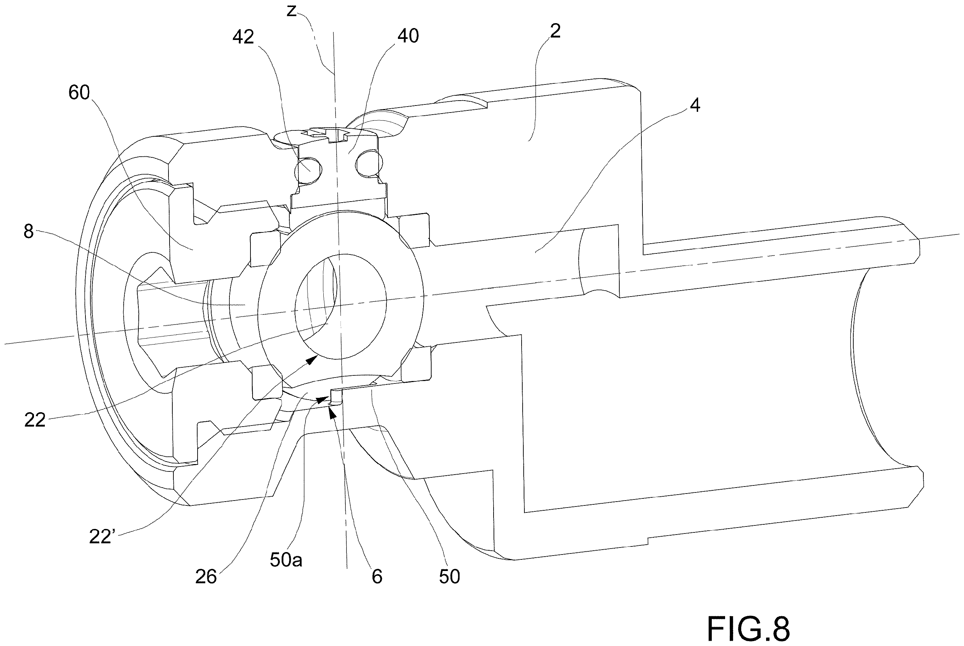

With reference to figures 5 to 8 and figure 9, according to a further embodiment, the imaginary abutment plane containing the abutment surface 26 of the stop 50 is parallel to the imaginary opening planes on which the openings 22', 22" of the conduit 22 of the shutter 20 lie.

In a configuration of maximum opening of the valve (figure 5), the shutter 20 is arranged in the angular position of maximum opening, wherein the abutment surface 26 of the shutter 20 is in abutment against the frontal abutment surface 50a of the abutment stop 50.

In said configuration, the internal passage 22 of the shutter 20 places the first conduit 4 in communication with the second conduit 8 of the valve body 2 with maximum flow.

By rotation of the shutter 20, the valve 1 enters a closed configuration, wherein the passage of water between the first conduit 4 and the second conduit 8 is obstructed.

In said closed configuration, the shutter 20 is arranged in the angular position of closure, wherein the abutment surface 26 of the shutter 20 is in abutment against the lateral abutment surface 50b of the abutment stop 50.

Advantageously, such embodiment allows high precision of the open position as it is defined by the abutment between two surfaces (the abutment surface 26 of the shutter 20 and the frontal abutment surface 50a of the abutment stop 50), which, as described below, are machined in such a way as to obtain a narrow dimensional or position tolerance, in particular by tool machining to remove chips.

Furthermore, according to a variant of embodiment of the invention, the valve 1 comprises a perforated end piece 60, preferably threaded externally and applicable to the second conduit 8 of the valve body 2.

The second conduit 8 is shaped so as to allow the insertion of the shutter 20 into the shutter seat 6 and the application of the end piece 60 to keep the shutter 20 in the shutter seat 6.

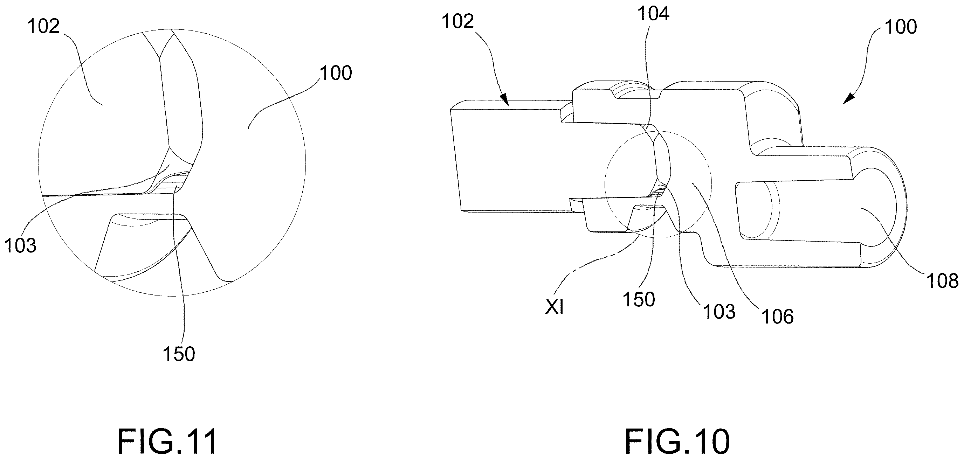

To manufacture the valve body according to the present invention, a first semi-finished product 100 (figures 10 and 11) is made, for example, from a length of bar via hot or cold pressing using a pressing pin 102 with a recess 103 in the tip.

The first semi-finished product 100 has a first primitive compartment 104 and a second primitive compartment 108 separated by a septum wall 106; the first primitive compartment 104 and the second primitive compartment 108, after subsequent machining, will respectively form the first conduit 4 and the second conduit 8 of the valve body 2, or vice versa.

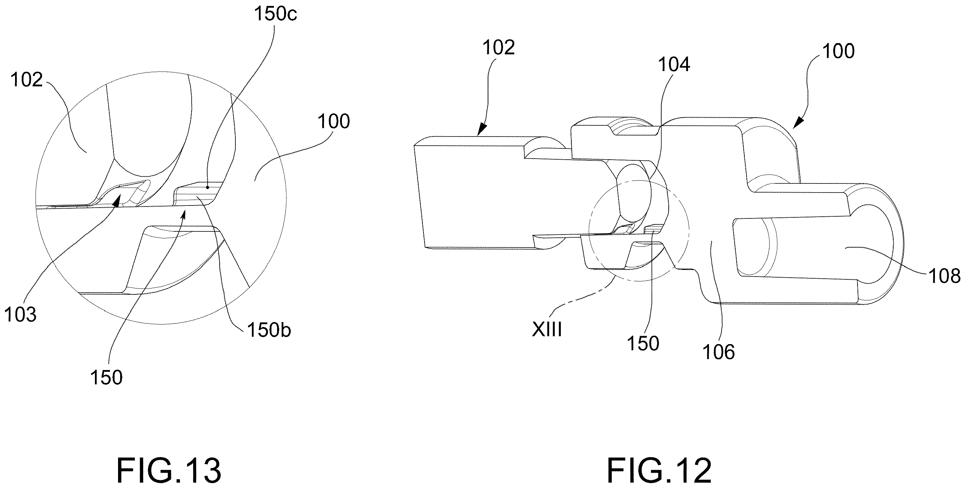

The pin 102 being extracted from the first semi-finished product 100 (figures 12 and 13), the first primitive compartment 104 of the first semi-finished product 100 is provided with a primitive stop 150 formed during pressing by the presence of the recess 103 in the tip of the pin 102.

The primitive stop 150 has a primitive frontal surface, a primitive lateral surface and a primitive upper surface; the primitive frontal surface and the primitive upper surface, after subsequent machining, will respectively form the frontal abutment surface of the stop 50a and the upper surface 50c of the abutment stop 50.

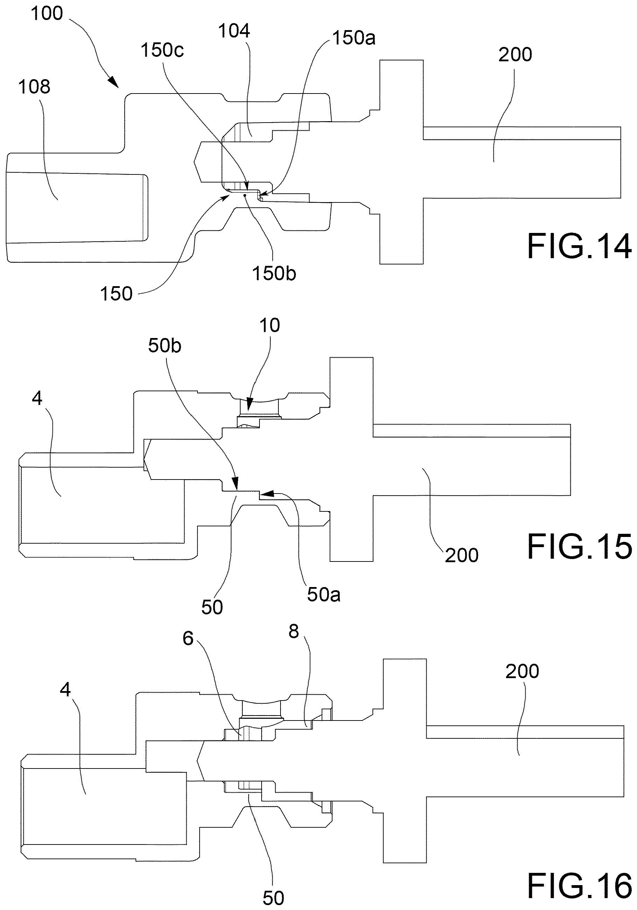

The first semi-finished product 100 then undergoes machining operations to remove chips (figures 14, 15 and 16) .

In a machining operation to remove chips carried out by means of a cutting tool 200, such as a suitably shaped cutter, the lateral surface of the first primitive compartment 104 (figure 14) is finished to obtain one of said conduits 4, 8 of the valve body 2.

During such stage, the cutting tool 200 also machines the primitive stop 150 at the primitive upper surface 150c and the primitive frontal surface 150a, thereby obtaining respectively the upper surface 50c and the frontal abutment surface 50a of the abutment stop 50. The primitive lateral surface 150b remains, with its finishing resulting from pressing.

For example, for the protruding frontal surface 50a, a position tolerance for the abutment plane on the order of hundredths of a millimeter is obtained. The lateral abutment surface 50b, however, remains with a position tolerance for the plane on the order of 1 to 2 tenths of a millimeter, typical of pressing.

Preferably, during the same preceding machining operation, the septum wall 106 is removed to obtain the shutter seat 6 and place the second primitive compartment 108 in communication with the conduit 4, 8 (figure 15).

During a further machining operation to remove chips, the lateral surface of the second primitive compartment 108 is finished to obtain the other conduit 8, 4 of the valve body 2.

During a machining operation for still further chip removal, the pin passage 10 is formed.

Innovatively, the valve according to the present invention is particularly compact in size, as it is devoid of the neck from which the lever pin protrudes, and furthermore has a stop for the end of stroke for the rotation of the shutter.

Advantageously, furthermore, the method of manufacture is particularly simple and fast.

According to a variant of embodiment, the first conduit is shaped so as to allow the insertion of the shutter and the application of the end piece.

Such variants of embodiment are also contained within the scope of this application as defined by the following claims.

## Claims

1. Valve body (2) for a shut-off valve (1) for water distribution systems, made in one piece, provided with:
- a first conduit (4), a second conduit (8) and a shutter seat (6), placed between the first conduit (4) and the second conduit (8), suitable to accommodate a shutter (20) and provided with a circular, cylindrical bottom surface (6a), wherein the first conduit (4), the second conduit (8) and the shutter seat (6) are aligned along a body axis (X), coaxial with said bottom surface (6a) of the shutter seat (6);
- a pin passage (10) that extends along a rotation axis (Z) orthogonal to the body axis (X) and connects the shutter seat (6) with the external environment;
- **characterized by** the fact that the shutter seat (6) has an abutment stop (50) suitable to realize an end of stroke for the rotation of the shutter (20), wherein said abutment stop forms a step with the bottom surface (6a) of the shutter seat (6).

2. Valve body according to claim 1, made of metal, for example brass, by pressing.

3. Valve body according to claim 1 or 2, wherein the abutment stop (50) has a flat frontal abutment surface (50a), lying on an imaginary plane orthogonal to the body axis (X).

4. Valve body according to claim 3, wherein the abutment stop (50) has a lateral abutment surface (50b) incident to a circumferential direction of the bottom surface (6a) of the shutter seat (6).

5. Valve body according to claim 3 or 4, wherein the abutment stop (50) has an upper surface (50c), lying on an imaginary cylindrical surface, coaxial to the body axis (X).

6. Shut-off valve (1) for water distribution systems, comprising:
- a valve body (2) according to any of the preceding claims;
- a shutter (20) housed in the shutter seat (6), rotatable about the rotation axis (Z), for which said abutment stop (50) realizes an end of stroke that defines an angular position of maximum opening and an angular position of closure.

7. Valve according to claim 6, wherein the shutter (20) has a groove (24) having a flat abutment surface (26) contained on an imaginary plane parallel to the rotation axis (Z).

8. Valve according to claim 7, wherein the abutment surface (26) is machined so as to obtain a high surface finish, for example by means of tool machining to remove chips.

9. Valve according to claim 7 or 8, wherein said imaginary plane contains the rotation axis (Z).

10. Valve according to any of claims 7 to 9, wherein
- in a closed configuration, the shutter (20) is arranged in the angular closure position, wherein the abutment surface (26) of the shutter (20) is in abutment against the frontal abutment surface (50a) of the abutment stop (50) .

11. Valve according to any of claims 7 to 9, wherein
- in a configuration of maximum opening, the shutter (20) is arranged in the angular position of maximum opening, wherein the abutment surface (26) of the shutter (20) is in abutment against the frontal abutment surface (50a) of the abutment stop (50).

12. Valve according to any of claims 7 to 11, wherein the shutter (20) has a cut (30) on the side opposite to the groove (24), for engagement with a maneuvering lever.

13. Method of manufacture of a valve body (2) of a shut-off valve (1) for water distribution systems according to anyone of claims 1 to 5, comprising the steps of:
- realizing a first semi-finished product (100) in one piece by pressing, wherein said first semi-finished product (100) has a first primitive compartment (104) in which, using a pressing pin (102) that has a recess (103) in the tip, a primitive stop (150) is formed, provided with a primitive frontal surface (150a), a primitive lateral surface (150b) and a primitive upper surface (150c);
- performing a single tool machining to remove chips with a cutting tool (200), to
i) finish and shape the first primitive compartment (104) to obtain a first conduit (4) or a second conduit (8) of the valve body (2), and to
ii) finish the primitive frontal surface (150a) and the primitive upper surface (150c) to obtain, respectively, a frontal abutment surface (50a) and an upper surface (50c) of an abutment stop (50) that realizes an end of stroke for the rotation of a shutter (20) insertable into the valve body (2).

## Patentansprüche

1. Ventilkörper (2) für ein Absperrventil (1) für Wasserverteilungssysteme aus einem Stück, versehen mit:
- einer ersten Leitung (4), einer zweiten Leitung (8) und einem Verschlusssitz (6), der zwischen der ersten Leitung (4) und der zweiten Leitung (8) platziert ist, geeignet zum Aufnahmen eines Verschlusses (20) und mit einer kreisförmigen, zylindrischen Bodenfläche (6a) versehen, wobei die erste Leitung (4), die zweite Leitung (8) und der Verschlusssitz (6) entlang einer Körperachse (X) ausgerichtet sind, koaxial zu der Bodenfläche (6a) des Verschlusssitzes (6);
- einen Stiftdurchgang (10), der sich entlang einer Rotationsachse (Z) orthogonal zu der Körperachse (X) erstreckt und den Verschlusssitz (6) mit der äußeren Umgebung verbindet;
- **gekennzeichnet durch** die Tatsache, dass der Verschlusssitz (6) einen Anlagestopp (50) aufweist, der geeignet ist, ein Hubende für die Rotation des Verschlusses (20) zu realisieren, wobei der Anlagestopp eine Stufe mit der Bodenfläche (6a) des Verschlusssitzes (6) bildet.

2. Ventilkörper nach Anspruch 1, hergestellt aus Metall, beispielsweise Messing, durch Pressen.

3. Ventilkörper nach Anspruch 1 oder 2, wobei der Anlagestopp (50) eine flache vordere Anschlagsfläche (50a) aufweist, die auf einer imaginären Ebene orthogonal zu der Körperachse (X) liegt.

4. Ventilkörper nach Anspruch 3, wobei der Anlagestopp (50) eine seitliche Anschlagsfläche (50b) aufweist, die in Umfangsrichtung der Bodenfläche (6a) des Verschlusssitzes (6) einfällt.

5. Ventilkörper nach Anspruch 3 oder 4, wobei der Anlagestopp (50) eine obere Fläche (50c) aufweist, die auf einer imaginären zylindrischen Oberfläche koaxial zu der Körperachse (X) liegt.

6. Absperrventil (1) für Wasserverteilungssysteme, umfassend:
- einen Ventilkörper (2) nach einem der vorhergehenden Ansprüche;
- einen Verschluss, der in dem Verschlusssitz (6) untergebracht ist, und zwar um die Drehachse (Z) drehbar, für den der Anlagestopp (50) ein Hubende realisiert, das eine Winkelposition maximaler Öffnung und eine Winkelposition der Schließung bzw. des Verschlusses definiert.

7. Ventil nach Anspruch 6, wobei der Verschluss (20) eine Nut (24) mit einer flachen Anlagefläche (26) aufweist, die in einer imaginären Ebene parallel zu der Rotationsachse (Z) enthalten ist.

8. Ventil nach Anspruch 7, wobei die Anlagefläche (26) so bearbeitet ist, dass eine hohe Oberflächengüte erzielt wird, beispielsweise mittels Werkzeugbearbeitung zur Entfernung von Spänen.

9. Ventil nach Anspruch 7 oder 8, wobei die imaginäre Ebene die Rotationsachse (Z) enthält.

10. Ventil nach einem der Ansprüche 7 bis 9, wobei
- in einer geschlossenen Konfiguration der Verschluss (20) in der Winkelschließposition angeordnet ist, wobei die Anlagefläche (26) des Verschlusses (20) gegen die vordere Anlagefläche (50a) des Anlagestopps (50) anliegt.

11. Ventil nach einem der Ansprüche 7 bis 9, wobei
- in einer Konfiguration maximaler Öffnung der Verschluss (20) in der Winkelposition maximaler Öffnung angeordnet ist, wobei die Anlagefläche (26) des Verschlusses (20) gegen die vordere Anlagefläche (50a) des Anlagestopps (50) anliegt.

12. Ventil nach einem der Ansprüche 7 bis 11, wobei der Verschluss (20) auf der der Nut (24) gegenüberliegenden Seite einen Einschnitt (30) zum Eingriff mit einem Manövrier- bzw. Bedienhebel aufweist.

13. Verfahren zur Herstellung eines Ventilkörpers (2) eines Absperrventils (1) für Wasserverteilungssysteme nach einem der Ansprüche 1 bis 5, umfassend die Schritte:
- Realisieren eines ersten Halbzeugs (100) in einem Stück durch Pressen, wobei das erste Halbzeug (100) ein erstes Primitivfach (104) aufweist, in dem unter Verwendung eines Pressstifts (102), der eine Aussparung (103) in der Spitze aufweist, ein Primitivstopp (150) ausgebildet wird, der mit einer vorderen Primitivfläche (150a), einer seitlichen Primitivfläche (150b) und einer oberen Primitivfläche (150c) versehen ist;
- Durchführen einer Einzelwerkzeugbearbeitung zum Entfernen von Spänen mit einem Schneidwerkzeug (200) zum
i) Fertigstellen und Formen des ersten Primitivfachs (104), um eine erste Leitung (4) oder eine zweite Leitung (8) des Ventilkörpers (2) zu erhalten, und zum
ii) Fertigstellen der vorderen Primitivfläche (150a) und der oberen Primitivfläche (150c), um eine vordere Anlagefläche (50a) bzw. eine obere Fläche (50c) eines Anlagestopps (50) zu erhalten, der ein Hubende für die Rotation eines Verschlusses (20) realisiert, der in den Ventilkörper (2) einsetzbar ist.

## Revendications

1. Corps de vanne (2) pour une vanne d'arrêt (1) pour des systèmes de distribution d'eau, réalisé d'une seule pièce, pourvu :
- d'un premier conduit (4), d'un second conduit (8) et d'un siège de volet obturateur (6), placé entre le premier conduit (4) et le second conduit (8), approprié pour loger un volet obturateur (20) et pourvu d'une surface de fond cylindrique circulaire (6a), dans lequel le premier conduit (4), le second conduit (8) et le siège de volet obturateur (6) sont alignés selon un axe de corps (X), coaxial avec ladite surface de fond (6a) du siège de volet obturateur (6) ;
- d'un passage de goupille (10) qui s'étend le long d'un axe de rotation (Z) orthogonal à l'axe de corps (X) et relie le siège de volet obturateur (6) à l'environnement externe ;
- **caractérisé par le fait que** le siège de volet obturateur (6) a un arrêt de butée (50) approprié pour réaliser une fin de course pour la rotation du volet obturateur (20), dans lequel ledit arrêt de butée forme un décrochement avec la surface de fond (6a) du siège de volet obturateur (6).

2. Corps de vanne selon la revendication 1, réalisé en métal, par exemple en laiton, par compression.

3. Corps de vanne selon la revendication 1 ou 2, dans lequel l'arrêt de butée (50) a une surface de butée frontale plate (50a), se trouvant sur un plan imaginaire orthogonal à l'axe de corps (X).

4. Corps de vanne selon la revendication 3, dans lequel l'arrêt de butée (50) a une surface de butée latérale (50b) incidente sur une direction circonférentielle de la surface de fond (6a) du siège de volet obturateur (6).

5. Corps de vanne selon la revendication 3 ou 4, dans lequel l'arrêt de butée (50) a une surface supérieure (50c), se trouvant sur une surface cylindrique imaginaire, coaxiale à l'axe de corps (X).

6. Vanne d'arrêt (1) pour des systèmes de distribution d'eau, comprenant :
- un corps de vanne (2) selon l'une quelconque des revendications précédentes ;
- un volet obturateur (20) logé dans le siège de volet obturateur (6), pouvant tourner autour de l'axe de rotation (Z), pour lequel ledit arrêt de butée (50) réalise une fin de course qui définit une position angulaire d'ouverture maximale et une position angulaire de fermeture.

7. Vanne selon la revendication 6, dans lequel le volet obturateur (20) a une gorge (24) ayant une surface de butée plate (26) contenue sur un plan imaginaire parallèle à l'axe de rotation (Z).

8. Vanne selon la revendication 7, dans lequel la surface de butée (26) est usinée de façon à obtenir un fini de surface de haute qualité, par exemple au moyen d'un usinage-outil pour éliminer des copeaux.

9. Vanne selon la revendication 7 ou 8, dans lequel ledit plan imaginaire contient l'axe de rotation (Z).

10. Vanne selon l'une quelconque des revendications 7 à 9, dans lequel
- dans une configuration fermée, le volet obturateur (20) est agencé dans la position angulaire de fermeture, dans laquelle la surface de butée (26) du volet obturateur (20) est en butée contre la surface de butée frontale (50a) de l'arrêt de butée (50).

11. Vanne selon l'une quelconque des revendications 7 à 9, dans lequel
- dans une configuration d'ouverture maximale, le volet obturateur (20) est agencé dans la position angulaire d'ouverture maximale, dans laquelle la surface de butée (26) du volet obturateur (20) est en butée contre la surface de butée frontale (50a) de l'arrêt de butée (50).

12. Vanne selon l'une quelconque des revendications 7 à 11, dans lequel le volet obturateur (20) a une découpe (30) sur le côté opposé à la gorge (24), pour un enclenchement avec un levier de manœuvre.

13. Procédé de fabrication d'un corps de vanne (2) d'une vanne d'arrêt (1) pour des systèmes de distribution d'eau selon l'une quelconque des revendications 1 à 5, comprenant les étapes de :
- réalisation d'un premier produit semi-fini (100) d'une seule pièce par compression, dans lequel ledit premier produit semi-fini (100) a un premier compartiment primaire (104) dans lequel, à l'aide d'une goupille de compression (102) qui a un évidement (103) à l'extrémité, un arrêt primaire (150) est formé, pourvu d'une surface frontale primaire (150a), d'une surface latérale primaire (150b) et d'une surface supérieure primaire (150c) ;
- accomplissement d'un usinage-outil unique pour enlever des copeaux avec un outil de coupe (200), pour
i) finir et façonner le premier compartiment primaire (104) pour obtenir un premier conduit (4) ou un second conduit (8) du corps de vanne (2), et pour
ii) finir la surface frontale primaire (150a) et la surface supérieure primaire (150c) pour obtenir, respectivement, une surface de butée frontale (50a) et une surface supérieure (50c) d'un arrêt de butée (50) qui réalise une fin de course pour la rotation d'un volet obturateur (20) pouvant être inséré dans le corps de vanne (2).
